# FASCICULE DE BREVET EUROPEEN

(11) **EP 0 775 394 B1**
(45) Date de publication et mention de la délivrance du brevet: **26.05.1999**
(21) Numéro de dépôt: 95914426.2
(22) Date de dépôt: 27.03.1995
(51) Int. Cl.: H04B 7/26

(54) **PROCEDE D'ADAPTATION DE L'INTERFACE AIR, DANS UN SYSTEME DE RADIOCOMMUNICATION VERS DES MOBILES**
VERFAHREN ZUR LUFTSCHNITTSTELLENANPASSUNG IN EINER MOBILEN FUNKKOMMUNIKATIONSANORDNUNG
AIR INTERFACE ADAPTING METHOD FOR A MOBILE RADIO SYSTEM

(30) Priorité: 31.03.1994 FR 9403860
(43) Date de publication de la demande: 28.05.1997
(73) Titulaire: ALCATEL, 75008 Paris (FR)
(72) Inventeur: DE SEZE, Fabrice, F-75017 Paris (FR); DELPRAT, Marc, F-78150 Le Chesnay (FR); MOUROT, Christophe, F-92600 Asnières (FR)
(74) Mandataire: El Manouni, Josiane
(86) Numéro de dépôt international: FR9500381
(87) Numéro de publication internationale: WO9527345

(56) Documents cités:
- EP-A- 0 428 199
- EP-A- 0 538 546
- WO-A-93/14584
- WO-A-94/01956
- WO-A-94/05095
- GB-A- 2 253 546
- US-A- 5 214 687

## Description

Le domaine de l'invention est celui des radiocommunications numériques vers des mobiles. L'invention s'applique notamment aux systèmes de radiocommunication cellulaires, tels que, par exemple, les systèmes répondant au standard GSM (Groupe Spécial Mobile).

Plus particulièrement, l'invention concerne les échanges de données numériques dans les systèmes mettant en oeuvre un multiplexage temporel, selon la technique dite AMRT (Accès Multiple par Répartition dans le Temps).

De façon connue, la technique AMRT consiste à diviser le temps en trames de durée fixe et prédéterminée, elles-mêmes divisées en intervalles de temps. A chaque communication à assurer, on associe un ou plusieurs intervalles de temps. Dans chaque intervalle de temps, on peut transmettre un paquet (ou "burst" en anglo-saxon).

Ainsi, une trame comprend N intervalles de temps (soit N paquets), pouvant correspondre à N communications. Chaque récepteur sait extraire les paquets correspondant aux intervalles de temps qui lui sont destinés, de façon à reconstruire le signal source. De cette façon, N communications peuvent être transmises sur une même bande de fréquences.

Après transmission dans un canal radio, en particulier un canal radiomobile avec saut de fréquence et répartition quasi-aléatoire des signaux d'interférence, la qualité des trames (et donc des paquets que celles-ci contiennent) est variable. En effet, le canal de transmission peur subir diverses perturbations, telles que, notamment, les phénomènes d'évanouissement rapide ou de parasites impulsifs, qui induisent des suites d'erreurs dans les trames.

Afin de tenter de s'affranchir de ces problèmes, dans un mode de transmission standard, les données à transmettre, qui sont organisées en blocs source, sont codées puis réparties (c'est-à-dire entrelacées) dans des paquets (ou "bursts") appartenant chacun à une trame distincte. Le document **WO93/14584** décrit un système de radiocommunication mobile numérique dans lequel les données sont entrelacées. Pour réduire le retard de transmission dû à l'entrelacement, dans le mode demi-débit, on alloue des paires de trames adjacentes à chacun de deux utilisateurs au lieu d'allouer alternativement chaque trame à un de ces utilisateurs.

Le codage, généralement appelé codage de contrôle des erreurs ou codage de canal, vise à protéger les données utiles à transmettre en les transformant de façon judicieuse en données codées. Généralement, la taille d'un bloc codé est supérieure à la taille d'un bloc source. Ainsi, à la réception, le traitement des données codées permet de retrouver les données utiles, même en présence d'éventuelles erreurs de transmission dues à la mauvaise qualité du canal de transmission.

L'entrelacement, qui suit le codage, consiste à répartir dans plusieurs paquets appartenant à des trames distinctes, et donc transmettre à des instants séparés, les données d'un même bloc codé. Ainsi, à la réception, le décodage est précédé d'un désentrelacement qui permet de briser les suites d'erreurs, et, idéalement, obtenir des erreurs isolées plus facilement corrigibles par les codes utilisés ensuite lors du décodage.

Il est à noter que dans le mode de transmission standard, l'entrelacement, c'est-à-dire la répartition des données d'un même bloc codé dans plusieurs paquets, est obligatoire puisque la taille de ces blocs codés, notamment du fait de la présence d'un nombre relativement important de données de redondance, ne permet pas de placer entièrement un bloc codé dans un paquet. En effet, le codage, et donc le nombre de données de redondance, sont choisis de façon à permettre un décodage correct pour une mauvaise qualité de canal de transmission (c'est-à-dire dans le cas le plus défavorable).

Ce mode de transmission standard, s'il permet effectivement un échange de données convenable quelle que soit la qualité du canal de transmission, présente néanmoins plusieurs inconvénients.

Tout d'abord, il est clair que le mode de transmission standard étant prévu pour fonctionner dans le cas le plus défavorable, il n'est pas optimisé lorsque la qualité du canal de transmission est plutôt bonne.

Par ailleurs, l'entrelacement à l'émission implique un retard parfois important à la réception puisque le désentrelacement correspondant suppose l'arrivée de plusieurs trames successives pour pouvoir reconstituer un bloc codé.

L'invention a notamment pour objectif de pallier ces différents inconvénients de l'état de la technique.

Plus précisément, l'un des objectifs de la présente invention est de fournir un procédé d'adaptation de l'interface air dans un système de radiocommunication, permettant d'optimiser les échanges de paquets de données contenus dans des trames, et notamment de réduire le nombre de données transmises.

Un autre objectif de l'invention est de fournir un tel procédé, qui permette de réduire les retards.

L'invention a également pour objectif de fournir un tel procédé, qui permette d'optimiser l'utilisation des ressources de transmission (c'est-à-dire des canaux) et donc de limiter les interférences induites dans les cellules proches utilisant les mêmes bandes de fréquence. Cet objectif de limitation des interférences est notamment crucial dans les systèmes de radiocommunication cellulaire. En effet, dans ces systèmes, une même bande de fréquences est allouée à plusieurs cellules géographiques. Bien que la répartition de ces dernières soit définie de façon à maximiser la distance entre ces cellules, il n'est pas rare que les signaux d'une cellule donnée soient perturbés par ceux d'autres cellules utilisant la même bande.

Ces objectifs, ainsi que d'autres qui apparaîtront par la suite, sont atteints selon l'invention à l'aide d'un procédé d'adaptation de l'interface air, dans un système de radiocommunication vers des mobiles du type véhiculant, entre au moins un mobile et au moins une station de base, des trames constituées chacune de N intervalles de temps, un paquet de données pouvant être transmis dans chaque intervalle de temps, chaque intervalle de temps étant associé à une communication distincte entre un mobile et une station de base,
ledit système prévoyant un premier mode de transmission, dans lequel les données à transmettre d'une communication sont organisées en premiers blocs issus d'un premier codage de blocs source, chacun desdits premiers blocs possédant une taille supérieure à la contenance de (P - 1) paquet(s), avec P un nombre pair au moins égal à deux, les données d'un même premier bloc étant réparties dans au moins P paquets,
ledit système prévoyant un second mode de transmission, dans lequel les données à transmettre d'une communication sont organisées en seconds blocs possédant chacun une taille inférieure ou égale à la contenance de P/2 paquet(s), les données d'un même second bloc étant réparties dans au plus P/2 paquet(s), au moins P/2 paquet(s) étant disponibles par rapport audit premier mode de transmission, et un mécanisme de requête de retransmission automatique étant mis en oeuvre de façon à retransmettre dans lesdits paquets disponibles des seconds blocs qui sont détectés mal reçus,
et, pour chaque communication entre un mobile et une station de base à travers un canal de transmission, on réalise une analyse de la qualité dudit canal de transmission et on sélectionne un desdits modes de transmission en fonction de ladite analyse de la qualité du canal de transmission, ledit second mode de transmission nécessitant un niveau de qualité du canal de transmission supérieur à celui nécessité par ledit premier mode de transmission.

Le principe de l'invention consiste donc à utiliser sélectivement un premier ou un second mode de transmission. Le premier mode de transmission correspond au mode de transmission standard discuté auparavant . Le second mode de réalisation met en oeuvre la technique de transmission paquet par paquet avec requête de retransmission automatique, généralement appelée "burst by burst ARQ (Automatic Repeat Request)" en anglo-saxon. Ainsi, l'invention utilise avantageusement le fait que, pour une qualité de canal suffisante, la technique "burst by burst ARQ" (second mode de transmission) est plus efficace que la technique de codage - entrelacement (premier mode de transmission).

En d'autres termes, lorsque la qualité du canal est suffisante, le second mode de transmission est sélectionné et les échanges de données sont optimisés. En effet :
- le nombre de données transmises est réduit puisqu'il n'y a pas de codage (et donc pas de redondance) ou seulement un "léger" codage (entraînant moins de redondance que le codage mis en oeuvre dans le premier mode de transmission). Il est à noter que, généralement, afin de permettre une détection d'erreurs, on utilise un codage minimal ; et
- les temps de retards sont réduits puisqu'il n'y a pas (ou moins) d'entrelacement (on passe d'une répartition dans au moins P paquets (c'est-à-dire au moins P trames) à une répartition dans au plus P/2 paquets (c'est-à-dire P/2 trames)). Une bonne qualité de canal suffisante est par exemple obtenue dans un environnement intérieur ("indoor" en anglo-saxon).

Par contre, lorsque la qualité du canal est plutôt mauvaise, le premier mode de transmission est celui qui convient le mieux puisqu'il permet, grâce à un codage "robuste" et un entrelacement plus profond, de corriger un nombre assez élevé d'erreurs.

Généralement, la technique "burst by burst ARQ" est mise en oeuvre de la façon suivante : l'intervalle de temps Δt séparant l'émission de deux paquets successifs est de durée constante, sauf lorsqu'un paquet est retransmis. En effet, dans ce cas, si le n^{ème} paquet, par exemple, est détecté mal reçu, il est retransmis à l'instant prévu pour la transmission du (n+1)^{ème} paquet (c'est-à-dire Δt après la transmission du n^{ème} paquet). Une ressource de transmission supplémentaire est alors libérée pendant un intervalle de temps suivant, de façon que le (n+1)^{ème} paquet soit transmis avant l'instant prévu pour le (n+2)^{ème} paquet, qui lui est transmis comme prévu 2Δt après la transmission du n^{ème} paquet.

Dans le mode de réalisation avantageux de l'invention, la technique "burst by burst ARQ " est mise en oeuvre différemment. En effet, dans le second mode de transmission, chaque trame comprend, pour chaque communication, un paquet, et il existe au moins P/2 paquets disponibles. Ces paquets disponibles peuvent donc être utilisés pour retransmettre des paquets détectés mal reçus. En d'autres termes, le système n'a pas à libérer de ressource de transmission supplémentaire et tous les paquets (et notamment ceux qui sont retransmis) peuvent être transmis à intervalles de temps régulier (à savoir toutes les trames utiles, sauf s'il n'y a pas de retransmission). Par exemple, si le n^{ème} paquet est détecté mal reçu, il est retransmis pendant l'intervalle de temps prévu pour la transmission du (n+1)^{ème} paquet, cet intervalle de temps étant disponible puisque le passage du premier au second mode de transmission libère des paquets (c'est-à-dire des intervalles de temps). Le (n+2)^{ème} paquet peut donc être transmis normalement 2Δt après la transmission du n^{ème} paquet.

De plus, dans ce mode de réalisation avantageux de l'invention, les interférences sont limitées puisqu'un paquet sur deux n'est pas utilisé (sauf lorsqu'un second bloc doit être retransmis) et ne peut donc pas engendrer d'interférences.

Avantageusement, ledit sytème de radiocommunication est du type GSM (Groupe Spécial Mobile), et ledit second mode de transmission est du type demi-débit, un second bloc possédant une taille inférieure ou égale à la contenance d'un paquet, seule une trame sur deux étant utilisée pour une communication donnée.

En effet, dans ce cas, un second bloc est suffisamment petit pour rentrer dans un paquet. Ainsi, sur une suite de quatre trames consécutives, un intervalle de temps donné dans les première et troisième trames est affecté à une première communication, et le même intervalle de temps dans les seconde et quatrième trames est affecté à une seconde communication. Le mode de réalisation avantageux de l'invention consiste, par exemple pour la première communication, à placer dans l'intervalle de temps correspondant de la première trame un paquet contenant un second bloc, l'intervalle de temps correspondant de la troisième trame étant soit vide soit utilisé pour retransmettre dans un paquet le second bloc transmis précédemment dans la première trame si ce second bloc est détecté mal reçu.

Avantageusement, les données d'un même premier bloc sont réparties dans au moins quatre paquets, et les données d'un même second bloc sont réparties dans un même paquet.

Préférentiellement, ledit premier mode de transmission appartient au groupe comprenant :
- un premier mode de transmission du type plein-débit, dans lequel un premier bloc possède une taille sensiblement égale à la contenance de quatre paquets, les données d'un même premier bloc étant réparties dans huit paquets, à raison d'environ un huitième dudit premier bloc par paquet;
- un premier mode de transmission du type demi-débit, dans lequel un premier bloc possède une taille sensiblement égale à la contenance de deux paquets, les données d'un même premier bloc étant réparties dans quatre paquets, à raison d'environ un quart dudit premier bloc par paquet, seule une trame sur deux étant utilisée pour une même communication.

En d'autres termes, le premier mode de transmission est préférentiellement, soit un mode GSM plein-débit, soit un mode GSM demi-débit.

Dans un premier mode de réalisation avantageux de l'invention, ledit premier mode de transmission étant du type demi-débit,
un premier quart d'un premier bloc donné étant placé dans un paquet d'une i^{ème} trame avec un troisième quart d'un premier bloc précédent,
un second quart dudit premier bloc donné étant placé dans un paquet d'une (i + 2)^{ème} trame avec un quatrième quart dudit premier bloc précédent,
un troisième quart dudit premier bloc donné étant placé dans un paquet d'une (i + 4)^{ème} trame avec un premier quart d'un premier bloc suivant,
un quatrième quart dudit premier bloc donné étant placé dans un paquet d'une (i + 6)^{ème} trame avec un second quart dudit premier bloc suivant,
lorsque ledit second mode de transmission est sélectionné, le passage dudit premier audit second mode de transmission consistant, pour chaque communication, à prendre comme dernier paquet transmis selon le premier mode de transmission un paquet à l'intérieur duquel sont placés un quatrième quart d'un premier bloc donné et un second quart d'un premier bloc suivant, ledit premier bloc suivant étant considéré à la réception comme non transmis puisque les troisième et quatrième quarts dudit premier bloc suivant ne sont jamais transmis,
et, lorsque ledit premier mode de transmission est sélectionné, le passage dudit second audit premier mode de transmission consistant, pour chaque communication, à prendre comme premier paquet transmis selon le premier mode de transmission un paquet à l'intérieur duquel est placé un premier quart d'un premier bloc donné.

Dans un second mode de réalisation avantageux de l'invention, ledit premier mode de transmission est à nouveau du type demi-débit, et lorsque ledit second mode de transmission est sélectionné, le passage dudit premier audit second mode de transmission consiste, pour chaque communication, à :
- diviser en deux un second bloc donné ;
- placer dans un paquet correspondant à cette communication et qui est l'avant-dernier paquet transmis selon le premier mode de transmission, un un troisième quart d'un premier bloc donné et une première moitié dudit second bloc donné,
- placer dans un paquet correspondant à cette communication et qui est le dernier paquet transmis selon le premier mode de transmission, un quatrième quart dudit premier bloc donné et une seconde moitié dudit second bloc donne.

Préférentiellement, lorsque ledit premier mode de transmission est sélectionné, le passage dudit second audit premier mode de transmission consiste, pour chaque communication, à :
- fabriquer un premier bloc artificiel ;
- diviser en deux un second bloc donné ;
- placer dans un paquet correspondant à cette communication et qui est l'avant-dernier paquet transmis selon le second mode de transmission, une première moitié dudit second bloc donné et un premier quart dudit premier bloc artificiel,
- placer dans un paquet correspondant à cette communication et qui est le dernier paquet transmis selon le second mode de transmission, une seconde moitié dudit second bloc donné et un second quart dudit premier bloc donné,
- placer dans un paquet correspondant à cette communication et qui est le premier paquet transmis selon le premier mode de transmission, un troisième quart dudit premier bloc artificiel et un premier quart d'un premier bloc donné,
- placer dans un paquet correspondant à cette communication et qui est le deuxième paquet transmis selon le premier mode de transmission, un quatrième quart dudit premier bloc artificiel et un second quart dudit premier bloc donné.

Ainsi, dans ces premier et second modes de réalisation, le premier mode de transmission est un mode GSM demi-débit et le second mode de transmission est un mode "burst by burst ARQ" demi-débit.

Dans le premier mode de réalisation avantageux de l'invention, le passage d'un mode de transmission à l'autre est réalisé "brutalement" et se traduit par la perte d'un premier bloc (lors d'un "changement" de premier bloc). Par contre, dans le second mode de réalisation avantageux de l'invention, le passage d'un mode de transmission à l'autre est réalisé "en douceur" puisqu'il n'y a pas de perte de premier bloc (grâce à une imbrication de premiers et seconds blocs lors du passage d'un mode de transmission à l'autre).

Avantageusement, lesdites données à transmettre sont des données de parole.

Préférentiellement, le passage du premier au second mode de transmission induisant un décalage temporel de transmission permettant un traitement plus rapide à la réception,
à l'émission, on réalise une analyse d'un signal de parole correspondant auxdites données de parole,
et on supprime ledit décalage temporel de transmission, de façon différée en fonction de ladite analyse du signal de parole, en cherchant à minimiser sur un signal de parole reconstitué à la réception, les perturbations dues audit passage du premier au second mode de transmission.

Ainsi, lors du passage du premier au second mode de transmission, on décide d'effectuer une réduction du décalage temporel de transmission (on parle également de réduction de retard). En effet, il existe un décalage temporel de transmission puisque, dans le premier mode de transmission, un premier bloc ne peut être reconstitué et traité qu'après une durée correspondant à la réception de six trames et un intervalles de temps, alors que dans le second mode transmission, dans le cas le plus défavorable (c'est-à-dire si le second bloc doit être retransmis), un second bloc peut être reconstitué après une durée correspondant à la réception de deux trames et un intervalle de temps (seulement un intervalle de temps si le second bloc n'a pas à être retransmis).

Afin de réduire ce retard sans trop perturber la qualité de la communication (cest-à-dire la qualité du signal de parole), on diffère la réduction du retard jusq'à une période de faible variation du signal de parole, c'est-à-dire une période pendant laquelle la suppression d'un bloc de parole est peu perceptible par les interlocuteurs.

Avantageusement, ladite analyse d'un signal de parole consiste à déterminer des coefficients spectraux dudit signal de parole.

De façon avantageuse, lesdits seconds blocs sont issus d'un second codage desdits blocs source. Ainsi, la correction d'erreurs est obtenue non seulement par la retransmission des seconds blocs détectés mal reçus mais également par codage / décodage. En d'autres termes, en codant les données utiles même dans le second mode de transmission mettant en oeuvre la technique "burst by burst ARQ", on ajoute un niveau supplémentaire de correction et on améliore la fiabilité des données reçues. Il est clair toutefois que le codage mis en oeuvre ici est moins puissant que celui mis en oeuvre dans le mode de transmission standard, puisqu'un (second) bloc doit pouvoir être contenu entièrement dans un paquet, et non pas réparti (comme les premier blocs) sur plusieurs paquets successifs.

Préférentiellement, pendant un fonctionnement selon ledit premier mode de transmission, l'analyse de la qualité du canal de transmission consiste à déterminer au moins une première information appartenant au groupe comprenant :
- le nombre de paquets détectés mal reçus ;
- une estimation du taux d'erreur bit (BER) ;
- une estimation de la réponse impulsionnelle du canal de transmission;
- une estimation du rapport signal à bruit ;
et, pendant un fonctionnement selon ledit second mode de transmission, l'analyse de la qualité du canal de transmission consiste à déterminer au moins une seconde information appartenant au groupe comprenant :
- le nombre de paquets retransmis;
- le nombre de paquets retransmis qui sont détectés mal reçus;
- une estimation du taux d'erreur bit (BER) ;
- une estimation de la réponse impulsionnelle du canal de transmission ;
- une estimation du rapport signal à bruit.

De façon préférentielle, pendant le fonctionnement selon ledit premier, respectivement second, mode de transmission, la sélection du second, respectivement premier, mode de transmission comprend une étape de comparaison de la première, respectivement seconde, information représentative de la qualité du canal de transmission avec au moins un premier, respectivement second, seuil prédéterminé.

Avantageusement, pendant le fonctionnement selon le premier mode de transmission, on passe au second mode de transmission si ladite première information représentative de la qualité du canal de transmission est inférieure audit premier seuil prédéterminé,
et, pendant le fonctionnement selon le second mode de transmission, on passe au premier mode de transmission si ladite seconde information représentative de la qualité du canal de transmission est supérieure audit second seuil prédéterminé.

De façon avantageuse, une indication du passage du premier au second mode de transmission est transmise à travers un canal annexe réservé aux données de protocole. Ainsi, dans le cas d'un système GSM, un tel canal annexe est par exemple un canal FACCH.

Préférentiellement, une indication du passage du second au premier mode de transmission est placée dans un desdits paquets disponibles.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 illustre de façon schématique un exemple de radiocommunication dans lequel le procédé de l'invention peut être mis en oeuvre;
- la figure 2 présente un schéma de principe du procédé de l'invention ;
- les figures 3 et 4 illustrent chacune un mode de transmission distinct pouvant être sélectionné lors de la mise en oeuvre du procédé de l'invention ;
- la figure 5 présente un schéma simplifié de fonctionnement en demi-débit du mode de transmission illustré sur la figure 4 ;
- la figure 6 présente un organigramme du procédé de l'invention ; et
- les figures 7, 8 et 9 illustrent chacune un exemple de répartition des données à transmettre dans des paquets, dans le cas d'un mode de transmission respectivement GSM plein-débit, GSM demi-débit et "burst by burst ARQ" demi-débit,

L'invention concerne donc un procédé d'adaptation de l'interface air, c'est-à-dire des couches physiques et liaison (niveaux 1 et 2 du modèle OSI ISO), dans un système de radiocommunication vers des mobiles permettant de réaliser, selon la technique AMRT (Accès Multiple par Répartition dans le Temps), des échanges de trames de données, et notamment de données de parole. Chaque trame est constituée de N intervalles de temps, un paquet de données pouvant être transmis dans chaque intervalle de temps, et chaque intervalle de temps étant associé à une communication distincte entre un mobile et une station de base,

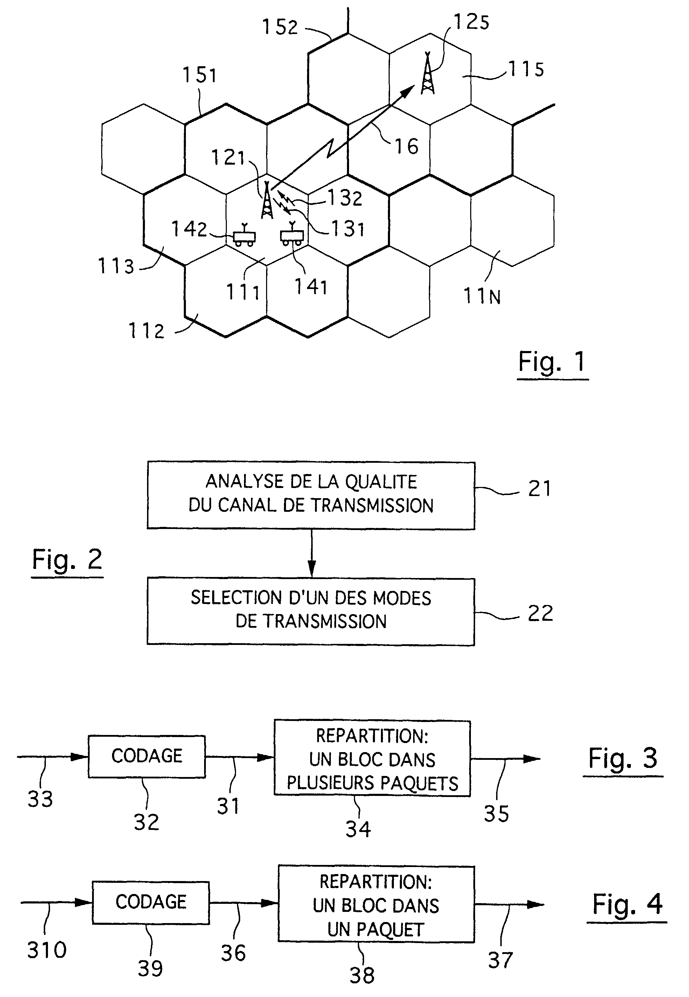

La figure 1 illustre de façon schématique un réseau cellulaire de type connu. Le territoire géographique couvert par le système de radiocommunication est divisé en cellules 11₁ à 11ₙ. Chaque cellule 11₁ comprend une station de base 12₁ capable d'échanger des trames de signaux 13₁, 13₂ avec une pluralité de mobiles 14₁, 14₂ circulant dans ladite cellule 11₁.

Deux cellules voisines 11₁, 11₂ exploitent des bandes de fréquence distinctes, de façon qu'il n'y ait pas d'interférences entre les signaux émis dans les deux cellules. Plus précisément, l'allocation des fréquences est basée sur une organisation des cellules en motifs 15₁, 15₂ de sept cellules. A l'intérieur d'un même motif, les fréquences allouées sont différentes. En revanche, d'un motif 15₁ à l'autre 15₂, elles sont réutilisées. Ainsi, par exemple, la cellule 11₅ utilise les mêmes fréquences que la cellule 11₁.

Comme présenté sur le schéma de la figure 2, le principe du procédé de l'invention est le suivant: pour chaque communication entre un mobile 14₁, 14₂ et une station de base 12₁, 12₅ à travers un canal de transmission, on réalise une analyse 21 de la qualité du canal de transmission et on sélectionne 22 un mode de transmission parmi au moins deux possibles en fonction du résultat de l'analyse précédente 21. En d'autres termes, les paquets d'une même trame peuvent être associés à des modes de transmission différents (premier ou second) puisque chaque paquet d'une trame correspond à une communication distincte.

Ces deux modes pouvant être sélectionnés diffèrent par la façon de répartir, pour une communication donnée, les blocs de données à transmettre dans les paquets contenus dans les trames et par la façon de corriger les erreurs de transmission.

Un premier mode de transmission pouvant être sélectionné est un mode standard illustré sur la figure 3. Dans ce mode standard, les données à transmettre 31 sont organisées en blocs codés issus d'un codage 32 de données utiles 33 elles-mêmes organisées en blocs source. Chaque bloc codé, qui est donc constitué de données codées (généralement en nombre plus élévé que le nombre de données utiles), possède une taille supérieure à la contenance de (P - 1) paquet(s) (35), avec P un nombre pair au moins égal à deux . Par conséquent, les données 31 d'un même bloc codé sont réparties 34 (c'est-à-dire entrelacées) dans au moins P paquets 35. Fréquemment, on a P = 2.

La correction des erreurs de transmission consiste, à la réception, à désentrelacer (c'est-à-dire reconstituer les blocs codés) puis à décoder (les blocs codés reconstitués). La fiabilité de ce premier mode de transmission est d'autant plus élevée que, d'une part, le codage est puissant (et donc le nombre de données après codage est important) et, d'autre part, la profondeur d'entrelacement (c'est-à-dire le nombre de paquets sur lesquels sont réparties les données d'un même bloc codé) est importante. Il est à noter que la profondeur d'entrelacement correspond également à un nombre de trames sur lesquelles un bloc codé est réparti puisque, pour une communication donnée, chaque trame comprend un paquet dans l'intervalle de temps réservé à cette communication.

Ce mode standard est donc capable de fonctionner même pour une mauvaise qualité du canal de transmission (c'est-à-dire même lorsque les données avant entrelacement et décodage contiennent un nombre assez élevé d'erreurs). Par contre, ce mode standard nécessite l'envoi d'un nombre relativement important de données du fait du codage, ce qui se fait au détriment des ressources disponibles pour les données utiles, et introduit des retards, du fait de l'entrelacement.

Un second mode de transmission pouvant être sélectionné est un mode de transmission du type "paquet par paquet avec requête de retransmission automatique" (ou "burst by burst ARQ" en anglo-saxon). Dans ce second mode de transmission, illustré sur la figure 4, les données à transmettre 36 sont organisées en blocs possédant chacun une taille inférieure (ou égale) à la contenance de P/2 paquet(s) 37. Par conséquent, les données 36 d'un même bloc sont placées 38 (sans entrelacement) dans au plus P/2 paquets 37.

Il existe donc au moins P/2 paquet(s) disponible(s) par rapport au premier mode de transmission, et ce sont ces paquets disponibles qui permettent la retransmission des paquets détectés mal reçus.

Il est à noter que dans l'exemple présenté sur la figure 4 les blocs de données à transmettre 36 sont issus d'un codage 39 de données utiles 310. Toutefois, l'invention concerne également le cas où les données utiles 310 constituent directement les données à transmettre 36. D'une façon générale, les données à transmettre 36 peuvent être issues de n'importe(s) quel(s) traitement(s), la condition à respecter étant que la taille d'un bloc de données à transmettre 36 doit toujours être inférieure à la contenance de P/2 paquet(s) 37.

Dans ce second mode de transmission, la correction des erreurs de transmission consiste à retransmettre les paquets (et donc les blocs, puisqu'un paquet contient un bloc) qui sont détectés mal reçus. La mise en oeuvre de ce second mode de transmission d'économiser les ressources de transmission lorsque la qualité du canal est bonne. En effet, dans ce cas, le nombre de paquets à retransmettre reste faible. Par ailleurs, ce second mode de transmission permet de réduire les retards puisqu'il n'y a pas d'entrelacement.

En sélectionnant de façon dynamique, en fonction de la qualité du canal de transmission, le mode de transmission le plus adapté (à savoir le premier mode de transmission lorsque la qualité est plutôt mauvaise, et le second lorsqu'elle est plutôt bonne), le procédé de l'invention permet d'optimiser l'utilisation des ressources et de réduire les retards lorsque c'est possible.

Dans la suite de la description, on considère le cas d'un système de radiocommunication du type GSM (Groupe Spécial Mobile). Il est clair cependant que l'invention n'est pas limitée à ce système particulier mais concerne plus généralement tous les sytèmes de radiocommunication.

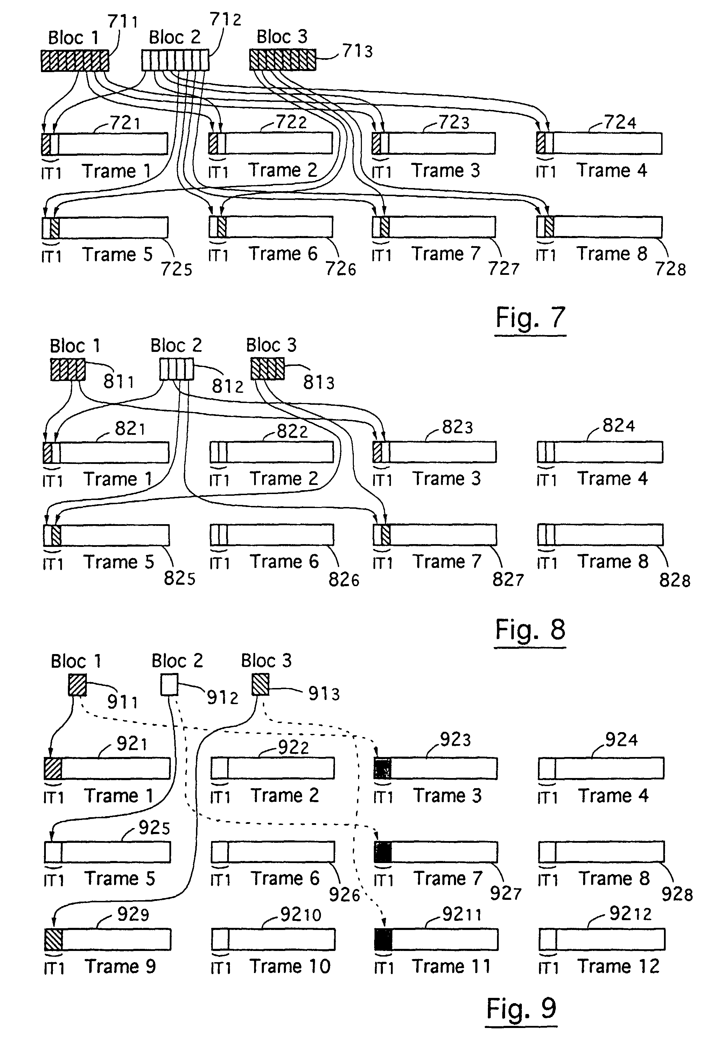

Les figures 7 et 8 illustrent chacune un exemple de répartition des données à transmettre dans des paquets, dans le cas d'un premier mode de transmission respectivement GSM plein-débit et GSM demi-débit

Dans le cas du type GSM plein-débit (cf figure 7), un premier bloc (71₁ à 71₃) possède une taille sensiblement égale à la contenance de quatre paquets (c'est-à-dire quatre intervalles de temps ; seul le premier intervalle de temps IT1 de chaque trame 72₁ à 72₈ a été représenté). Les données d'un même premier bloc sont réparties dans huit paquets, à raison d'environ un huitième du premier bloc par paquet. Ainsi, dans l'exemple de la figure 7, on a la répartition suivante :
- un premier huitième du premier bloc n°2 est placé dans un paquet de la trame n°1 avec un cinquième huitième du premier bloc n°1,
- un second huitième du premier bloc n°2 est placé dans un paquet de la trame n°2 avec un sixième huitième du premier bloc n°1,
- un troisième huitième du premier bloc n°2 est placé dans un paquet de la trame n°3 avec un septième huitième du premier bloc n°1,
- un quatrième huitième du premier bloc n°2 est placé dans un paquet de la trame n°4 avec un huitième huitième du premier bloc n°1,
- un cinquième huitième du premier bloc n°2 est placé dans un paquet de la trame n°5 avec un premier huitième du premier bloc n°3,
- un sixième huitième du premier bloc n°2 est placé dans un paquet de la trame n°6 avec un deuxième huitième du premier bloc n°3,
- un septième huitième du premier bloc n°2 est placé dans un paquet de la trame n°7 avec un troisième huitième du premier bloc n°3,
- un huitième huitième du premier bloc n°2 est placé dans un paquet de la trame n°8 avec un quatrième huitième du premier bloc n°3.
Dans le cas du GSM demi-débit (cf figure 8), un premier bloc (81₁ à 81₃) possède une taille sensiblement égale à la contenance de deux paquets (c'est-à-dire deux intervalles de temps ; seul le premier intervalle de temps IT1 de chaque trame 82₁ à 82₈ a été représenté). Les données d'un même premier bloc sont réparties dans quatre paquets, à raison d'environ un quart du premier bloc par paquet, et seule une trame sur deux 82₁, 82₃, 82₅, 82₇ est utilisée pour une même communication. Ainsi, dans l'exemple de la figure 8, on a la répartition suivante :
- un premier quart du premier bloc n°2 est placé dans un paquet de la trame n°1 avec un troisième quart du premier bloc n°1,
- un second quart du premier bloc n°2 est placé dans un paquet de la trame n3 avec un quatrième quart du premier bloc n°1,
- un troisième quart du premier bloc n°2 est placé dans un paquet de la trame n°5 avec un premier quart du premier bloc n°3,
- un quatrième quart du premier bloc n°2 est placé dans un paquet de la trame n°7 avec un deuxième quart du premier bloc n°3.

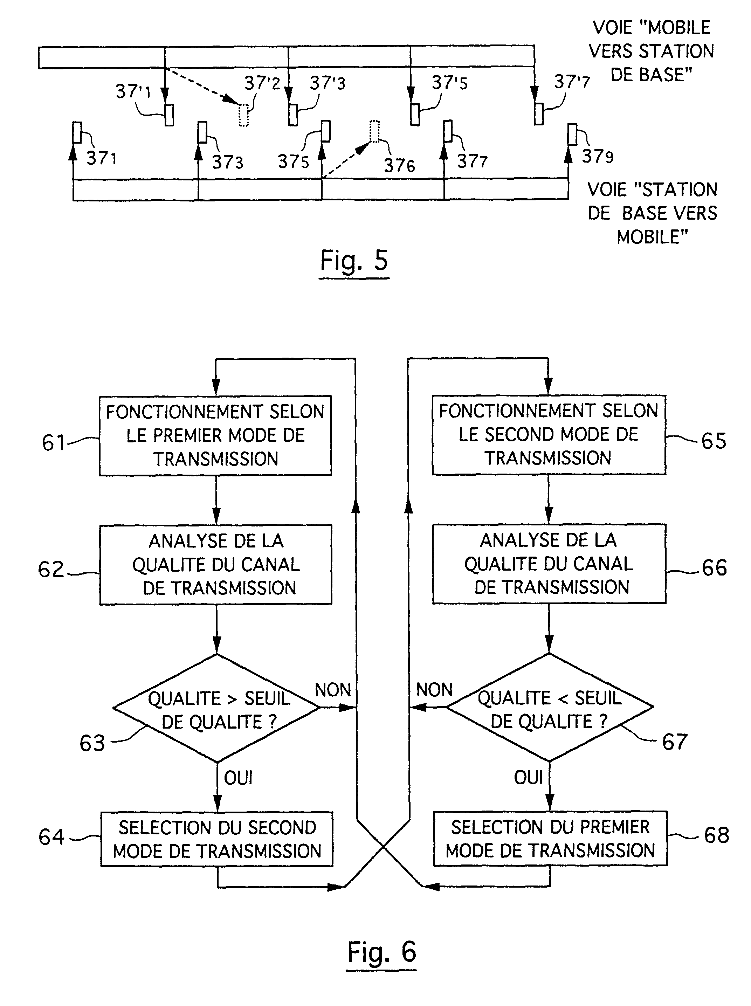

La figure 5 présente un schéma simplifié de fonctionnement d'un mode de réalisation particulier du mode de transmission "burst by burst ARQ" (second mode de transmission illustré sur la figure 4), à savoir un mode de réalisation en demi-débit. La figure 9 illustre de façon détaillée la répartition des données à transmettre dans des paquets, dans ce cas d'un mode de transmission "burst by burst ARQ" demi-débit.

Ainsi, dans le cas du mode de transmission "burst by burst ARQ" demi-débit (cf figure 9), un second bloc (91₁ à 91₃) possède une taille sensiblement égale à la contenance d'un paquet (c'est-à-dire un intervalle de temps ; seul le premier intervalle de temps IT1 de chaque trame 92₁ à 92₈ a été représenté). Les données d'un même second bloc sont toutes placées dans un même paquets, et seule une trame sur deux 92₁, 92₃, 92_{5,} 92_{7,} 92_{9,} 92₁₁ est utilisée pour une même communication. Ainsi, dans l'exemple de la figure 9, on a la répartition suivante :
- le bloc n°1 est placé dans un paquet de la trame n°1,
- le bloc n°2 est placé dans un paquet de la trame n°5,
- le bloc n°3 est placé dans un paquet de la trame n°9.

La retransmission de paquets mal reçus se fait de la façon suivante :
- si le paquet de la trame n°1 est mal reçu, le bloc n°1 est envoyé à nouveau dans un paquet de la trame n°3,
- si le paquet de la trame n°5 est mal reçu, le bloc n°2 est envoyé à nouveau dans un paquet de la trame n°7,
- si le paquet de la trame n°9 est mal reçu, le bloc n°3 est envoyé à nouveau dans un paquet de la trame n°11.

Sur la figure 5, on a représenté les deux voies de transmission entre une station de base et un mobile, à savoir une voie "mobile vers station de base" et une voie "station de base vers mobile" (ou "uplink" et "downlink" respectivement en anglo-saxon). Par ailleurs, dans un souci de clarté, les paquets vides, exceptés ceux utilisés pour retransmettre un bloc détecté mal reçu, n'ont pas été représentés. Enfin, on ne raisonne que sur les paquets correspondant à une même communication.

Dans cet exemple, sur la voie descendante, les deux premiers paquets 37₁, 37₃ contenant un bloc de données 51₁, 51₂ sont transmis correctement. Par contre, le troisième paquet 37₅ contenant un bloc de données 51₃ n'a pas été transmis correctement. Le récepteur le fait savoir à l'émetteur, qui réenvoie alors ce bloc 51₃ dans le paquet 37₆.

Dans l'exemple donné pour la voie ascendante, c'est le premier paquet 37'₁ qui est détecté mal reçu et dont le contenu est alors retransmis dans le paquet suivant 37'₂, sans que cela perturbe la transmission des autres paquets 37'₃, 37'₅, 37'₅ contenant des blocs de données à transmettre.

Un tel mode de réalisation du deuxième mode de transmission en demi-débit permet de limiter les interférences 16 dues à l'utilisation de mêmes fréquences dans des cellules distinctes 11₁, 11₅. En effet, pour un paquet sur deux 92_{3,} 92_{7,} 92₁₁ il n'y a pas de signaux émis (sauf s'il s'agit d'un bloc réémis), et donc pas d'interférences 16.

La figure 6 présente un organigramme du procédé de l'invention.

On considère par exemple qu'à un moment donné, pour une communication donnée, le système fonctionne (61) selon le premier mode de transmission. A intervalles de temps réguliers, c'est-à-dire par exemple après transmission d'un nombre prédéterminé de paquets, on analyse (62) la qualité du canal de transmission pour cette communication. Suite à cette analyse (62), on compare (63) la qualité estimée à un seuil de qualité prédéterminé. Si la qualité estimée est inférieure à ce seuil de qualité prédéterminé, le système continue, pour cette communication, à fonctionner (61) selon le premier mode de transmission. Dans le cas contraire, pour la communication donnée, on sélectionne (64) le second mode de transmission (64) et on passe à un fonctionnement (65) selon ce second mode de transmission Lorsque le système fonctionne (65) selon le second mode de transmission, on analyse (66), à intervalles de temps régulier, la qualité du canal de transmission. Suite à cette analyse (66), on compare (67) la qualité estimée au seuil de qualité précité. Si la qualité estimée est supérieure ou égale au seuil de qualité prédéterminé, le système continue, pour cette communication, à fonctionner (65) selon le second mode de transmission. Dans le cas contraire, on sélectionne (68) le premier mode de transmission et on passe, pour cette communication, à un fonctionnement (61) selon ce premier mode de transmission.

Plusieurs modes de réalisation de ces passages d'un mode de transmission à l'autre sont présentés par la suite.

Lorsque le système fonctionne (61) selon le premier mode de transmission, l'analyse (62) de la qualité du canal de transmission consiste par exemple à déterminer le nombre de paquets détectés mal reçus. La comparaison (63) de la qualité estimée du canal par rapport à un seuil de qualité prédéterminé revient alors à comparer le nombre de paquets détectés mal reçus (en pourcentage, c'est-à-dire pour un nombre donné de paquets reçus) par rapport à un nombre seuil prédéterminé. Il est à noter que le sens de l'inégalité est inversé (par rapport à celle concernant la qualité du canal) puisque le nombre de paquets détectés mal reçus est inversement proportionnel à la qualité du canal de transmission. On choisit par exemple de passer du premier au second mode de transmission lorsque le taux de paquets mal reçus est inférieur à 1% (calcul effectué par exemple sur les 500 derniers paquets, soit 10s dans le cas du GSM).

Il est clair que dans le cas du premier mode de transmission, il existe de nombreuses autres façons d'analyser la qualité du canal de transmission. On peut notamment utiliser les paramètres suivants : une estimation du taux d'erreur bit, une estimation de la réponse impulsionnelle du canal, ou encore une estimation du rapport signal à bruit.

Lorsque le système fonctionne (65) selon le second mode de transmission, l'analyse (66) de la qualité du canal de transmission consiste par exemple à déterminer le nombre de paquets retransmis. A nouveau, la comparaison (67) de la qualité estimée du canal par rapport à un seuil de qualité prédéterminé revient à comparer le nombre de paquets retransmis (en pourcentage, pour un nombre donné de paquets transmis) par rapport à un nombre seuil prédéterminé. On passe au premier mode de transmission seulement si le nombre de paquets retransmis est supérieur au nombre seuil prédéterminé, c'est-à-dire si la qualité estimée est inférieure à une valeur seuil prédéterminée (ici encore, il y a inversion des inégalités). On choisit par exemple de passer du second au premier mode de transmission lorsque l'on doit retransmettre au moins un paquet sur six ou si le nombre de paquets retransmis qui sont détectés mal reçus (c'est-à-dire faux) est supérieur à 3% (calcul effectué par exemple sur les 60 derniers paquets, soit 1,2 s dans le cas du GSM).

Dans le cas du second mode de transmission, l'analyse de la qualité du canal de transmission peut également consister à mesurer les paramètres suivants ; le nombre de paquets retransmis qui sont détectés mal reçus, une estimation du taux d'erreur bit, une estimation de la réponse impulsionnelle du canal de transmission, ou encore une estimation du rapport signal à bruit.

L'indication du passage du premier au second mode de transmission est par exemple transmise à travers un canal annexe réservé aux données de protocole (le canal FACCH par exemple dans le cas du GSM). L'indication du passage du second au premier mode de transmission est par exemple placée dans un paquet disponible 37₂, 37₄, 37₆, 37₈.

On considère maintenant le passage d'un mode de transmission à l'autre dans le cas particulier où le premier mode de transmission est un mode GSM demi-débit (cf figure 8) et le second mode de transmission est un mode "burst by burst ARQ" demi-débit (cf figure 9).

Une première solution proposée par l'invention consiste à :
- lorsque le second mode de transmission est sélectionné, passer du premier au second mode de transmission en prenant comme dernier paquet transmis selon le premier mode de transmission un paquet à l'intérieur duquel sont placés un quatrième quart d'un premier bloc donné et un second quart d'un premier bloc suivant. Par conséquent, le premier bloc suivant est considéré à la réception comme non transmis puisque les troisième et quatrième quarts de ce premier bloc suivant ne sont jamais transmis. En d'autres termes, on perd un bloc.
- lorsque ledit premier mode de transmission est sélectionné, passer du second au premier mode de transmission en prenant comme premier paquet transmis selon le premier mode de transmission un paquet à l'intérieur duquel est placé un premier quart d'un premier bloc donné. Le récepteur crée alors artificiellement un premier bloc afin de combler le retard de transmission dû à ce changement de mode de transmission.

Cette première solution apparaît donc assez "brutale" puisqu'elle se traduit par une perte de bloc dans un sens de passage, et l'ajout d'un bloc quelconque dans l'autre sens de passage.

Une seconde solution proposée par l'invention est plus souple. Selon cette seconde solution, lorsque le second mode de transmission est sélectionné, le passage du premier au second mode de transmission consiste, pour chaque communication, à :
- diviser en deux un second bloc donné ;
- placer dans un paquet correspondant à cette communication et qui est l'avant-dernier paquet transmis selon le premier mode de transmission, un un troisième quart d'un premier bloc donné et une première moitié dudit second bloc donné,
- placer dans un paquet correspondant à cette communication et qui est le dernier paquet transmis selon le premier mode de transmission, un quatrième quart dudit premier bloc donné et une seconde moitié dudit second bloc donné.

On passe donc de façon "souple" du premier au second mode de transmission puisque le dernier "premier bloc" est imbriqué avec le premier "second bloc". En d'autres termes, il n'y a pas de perte de bloc lors du passage du premier au second mode transmission.

Selon cette seconde solution, lorsque le premier mode de transmission est sélectionné, le passage du second au premier mode de transmission consiste, pour chaque communication, à :
- fabriquer un premier bloc artificiel ;
- diviser en deux un second bloc donné ;
- placer dans un paquet correspondant à cette communication et qui est l'avant-dernier paquet transmis selon le second mode de transmission, une première moitié dudit second bloc donné et un premier quart dudit premier bloc artificiel,
- placer dans un paquet correspondant à cette communication et qui est le dernier paquet transmis selon le second mode de transmission, une seconde moitié dudit second bloc donné et un second quart dudit premier bloc donné,
- placer dans un paquet correspondant à cette communication et qui est le premier paquet transmis selon le premier mode de transmission, un troisième quart dudit premier bloc artificiel et un premier quart d'un premier bloc donné,
- placer dans un paquet correspondant à cette communication et qui est le deuxième paquet transmis selon le premier mode de transmission, un quatrième quart dudit premier bloc artificiel et un second quart dudit premier bloc donné.

On passe donc de façon "souple" du second au premier mode de transmission puisque le dernier "second bloc" est imbriqué avec un premier "premier bloc"fabriqué artificiellement à l'émission (par exemple, par extrapolation de parole).

L'invention propose également de supprimer le décalage temporel de transmission (c'est-à-dire réduire le retard) induit par le passage du premier au second mode de transmission.

Par exemple, à l'émission, on réalise une analyse d'un signal de parole correspondant auxdites données de parole, et la suppression du retard est différée en fonction de cette analyse du signal de parole, de façon à minimiser sur un signal de parole reconstitué à la réception, les perturbations dues au passage du premier au second mode de transmission. L'analyse d'un signal de parole consiste par exemple à déterminer des coefficients spectraux du signal de parole, et en déduire les périodes de relative stabilité de ce signal de parole. La suppression (ou réduction) du retard, qui consiste à supprimer un bloc, est alors réalisée dès qu'une telle période est détectée.

## Revendications

1. Procédé d'adaptation de l'interface air, dans un système de radiocommunication vers des mobiles du type véhiculant, entre au moins un mobile (14₁, 14₂) et au moins une station de base (12₁, 12₅), des trames constituées chacune de N intervalles de temps, un paquet de données pouvant être transmis dans chaque intervalle de temps, chaque intervalle de temps étant associé à une communication distincte entre un mobile et une station de base,
ledit système prévoyant un premier mode de transmission, dans lequel les données à transmettre (31) d'une communication sont organisées en premiers blocs issus d'un premier codage (32) de blocs source (33), chacun desdits premiers blocs possédant une taille supérieure à la contenance de (P - 1) paquet(s) (35), avec P un nombre pair au moins égal à deux, les données d'un même premier bloc étant réparties dans au moins P paquets (35),
caractérisé en ce que ledit système prévoit un second mode de transmission, dans lequel les données à transmettre (310) d'une communication sont organisées en seconds blocs possédant chacun une taille inférieure ou égale à la contenance de P/2 paquet(s) (37), les données d'un même second bloc étant réparties dans au plus P/2 paquet(s), au moins P/2 paquet(s) étant disponible(s) par rapport audit premier mode de transmission, et un mécanisme de requête de retransmission automatique étant mis en oeuvre de façon à retransmettre dans lesdits paquets disponibles des seconds blocs qui sont détectés mal reçus,
et en ce que, pour chaque communication entre un mobile et une station de base à travers un canal de transmission, on réalise une analyse (21 ; 62, 66) de la qualité dudit canal de transmission et on sélectionne (22 ; 64, 68) un desdits modes de transmission en fonction de ladite analyse de la qualité du canal de transmission, ledit second mode de transmission nécessitant un niveau de qualité du canal de transmission supérieur à celui nécessité par ledit premier mode de transmission.

2. Procédé selon la revendication 1, caractérisé en ce que ledit sytème de radiocommunication est du type GSM (Groupe Spécial Mobile),
et en ce que ledit second mode de transmission est du type demi-débit, un second bloc (91₁ à 91₃) possédant une taille inférieure ou égale à la contenance d'un paquet, seule une trame sur deux (92₁, 92₃, 92_{5,} 92₇, 92₉, 92₁₁) étant utilisée pour une communication donnée.

3. Procédé selon la revendication 2, caractérisé en ce que les données d'un même premier bloc sont réparties dans au moins quatre paquets,
et en ce que les données d'un même second bloc sont réparties dans un même paquet

4. Procédé selon la revendication 3, caractérisé en ce que ledit premier mode de transmission appartient au groupe comprenant:
- un premier mode de transmission du type plein-débit, dans lequel un premier bloc (71₁ à 71₃) possède une taille sensiblement égale à la contenance de quatre paquets, les données d'un même premier bloc étant réparties dans huit paquets, à raison d'environ un huitième dudit premier bloc par paquet ;
- un premier mode de transmission du type demi-débit, dans lequel un premier bloc (81₁ à 81₃) possède une taille sensiblement égale à la contenance de deux paquets, les données d'un même premier bloc étant réparties dans quatre paquets, à raison d'environ un quart dudit premier bloc par paquet, seule une trame sur deux (82₁, 82₃, 82₅, 82₇) étant utilisée pour une même communication.

5. Procédé selon la revendication 4, ledit premier mode de transmission étant du type demi-débit,
un premier quart d'un premier bloc donné (81₂) étant placé dans un paquet d'une i^{ème} trame (82₁) avec un troisième quart d'un premier bloc précédent (81₁),
un second quart dudit premier bloc donné étant placé dans un paquet d'une (i + 2)^{ème} trame (82₃) avec un quatrième quart dudit premier bloc précédent,
un troisième quart dudit premier bloc donné étant placé dans un paquet d'une (i + 4)^{ème} trame (82₅) avec un premier quart d'un premier bloc suivant (81₃),
un quatrième quart dudit premier bloc donné étant placé dans un paquet d'une (i + 6)^{ème} trame (82₇) avec un second quart dudit premier bloc suivant,
caractérisé en ce que, lorsque ledit second mode de transmission est sélectionné, le passage dudit premier audit second mode de transmission consiste, pour chaque communication, à prendre comme dernier paquet transmis selon le premier mode de transmission un paquet à l'intérieur duquel sont placés un quatrième quart d'un premier bloc donné et un second quart d'un premier bloc suivant, ledit premier bloc suivant étant considéré à la réception comme non transmis puisque les troisième et quatrième quarts dudit premier bloc suivant ne sont jamais transmis,
et en ce que, lorsque ledit premier mode de transmission est sélectionné, le passage dudit second audit premier mode de transmission consiste, pour chaque communication, à prendre comme premier paquet transmis selon le premier mode de transmission un paquet à l'intérieur duquel est placé un premier quart d'un premier bloc donné.

6. Procédé selon la revendication 4, ledit premier mode de transmission étant du type demi-débit,
un premier quart d'un premier bloc donné (81₂) étant placé dans un paquet d'une i^{ème} trame (82₁) avec un troisième quart d'un premier bloc précédent (81₁),
un second quart dudit premier bloc donné étant placé dans un paquet d'une (i + 2)^{ème} trame (82₃) avec un quatrième quart dudit premier bloc précédent,
un troisième quart dudit premier bloc donné étant placé dans un paquet d'une (i + 4)^{ème} trame (82₅) avec un premier quart d'un premier bloc suivant (81₃),
un quatrième quart dudit premier bloc donné étant placé dans un paquet d'une (i + 6)^{ème} trame (82₇) avec un second quart dudit premier bloc suivant,
caractérisé en ce que, lorsque ledit second mode de transmission est sélectionné, le passage dudit premier audit second mode de transmission consiste, pour chaque communication, à :
- diviser en deux un second bloc donné ;
- placer dans un paquet correspondant à cette communication et qui est l'avant-dernier paquet transmis selon le premier mode de transmission, un un troisième quart d'un premier bloc donné et une première moitié dudit second bloc donné,
- placer dans un paquet correspondant à cette communication et qui est le dernier paquet transmis selon le premier mode de transmission, un quatrième quart dudit premier bloc donné et une seconde moitié dudit second bloc donné.

7. Procédé selon la revendication 6, caractérisé en ce que, lorsque ledit premier mode de transmission est sélectionné, le passage dudit second audit premier mode de transmission consiste, pour chaque communication, à :
- fabriquer un premier bloc artificiel ;
- diviser en deux un second bloc donné ;
- placer dans un paquet correspondant à cette communication et qui est l'avant-dernier paquet transmis selon le second mode de transmission, une première moitié dudit second bloc donné et un premier quart dudit premier bloc artificiel,
- placer dans un paquet correspondant à cette communication et qui est le dernier paquet transmis selon le second mode de transmission, une seconde moitié dudit second bloc donné et un second quart dudit premier bloc donné,
- placer dans un paquet correspondant à cette communication et qui est le premier paquet transmis selon le premier mode de transmission, un troisième quart dudit premier bloc artificiel et un premier quart d'un premier bloc donné,
- placer dans un paquet correspondant à cette communication et qui est le deuxième paquet transmis selon le premier mode de transmission, un quatrième quart dudit premier bloc artificiel et un second quart dudit premier bloc donné.

8. Procédé selon l'une quelconque des revendications 1 à 7, caractérisé en ce que lesdites données à transmettre sont des données de parole.

9. Procédé selon la revendication 8 et l'une quelconque des revendications 5 à 7, le passage du premier au second mode de transmission induisant un décalage temporel de transmission permettant un traitement plus rapide à la réception,
caractérisé en ce que, à l'émission, on réalise une analyse d'un signal de parole correspondant auxdites données de parole,
et en ce qu'on supprime ledit décalage temporel de transmission, de façon différée en fonction de ladite analyse du signal de parole, en cherchant à minimiser sur un signal de parole reconstitué à la réception, les perturbations dues audit passage du premier au second mode de transmission.

10. Procédé selon la revendication 9, caractérisé en ce que ladite analyse d'un signal de parole consiste à déterminer des coefficients spectraux dudit signal de parole.

11. Procédé selon l'une quelconque des revendications 1 à 10, caractérisé cn ce que lesdits seconds blocs (36) sont issus d'un second codage (39) desdits blocs source (310).

12. Procédé selon l'une quelconque des revendications 1 à 11, caractérisé en ce que, pendant un fonctionnement (61) selon ledit premier mode de transmission, l'analyse (62) de la qualité du canal de transmission consiste à déterminer au moins une première information appartenant au groupe comprenant :
- le nombre de paquets détectés mal reçus ;
- une estimation du taux d'erreur bit (BER) ;
- une estimation de la réponse impulsionnelle du canal de transmission ;
- une estimation du rapport signal à bruit ;
et en ce que, pendant un fonctionnement (65) selon ledit second mode de transmission, l'analyse (66) de la qualité du canal de transmission consiste à déterminer au moins une seconde information appartenant au groupe comprenant :
- le nombre de paquets retransmis;
- le nombre de paquets retransmis qui sont détectés mal reçus ;
- une estimation du taux d'erreur bit (BER) ;
- une estimation de la réponse impulsionnelle du canal de transmission ;
- une estimation du rapport signal à bruit.

13. Procédé selon la revendication 12, caractérisé en ce que, pendant le fonctionnement selon ledit premier (61), respectivement second (65), mode de transmission, la sélection du second, respectivement premier, mode de transmission comprend une étape de comparaison (63, 67) de la première, respectivement seconde, information représentative de la qualité du canal de transmission avec au moins un premier, respectivement second, seuil prédéterminé.

14. Procédé selon la revendication 13, caractérisé en ce que, pendant le fonctionnement (61) selon le premier mode de transmission, on passe au second mode de transmission (65) si ladite première information représentative de la qualité du canal de transmission est inférieure audit premier seuil prédéterminé,
et en ce que, pendant le fonctionnement (65) selon le second mode de transmission, on passe au premier mode de transmission (61) si ladite seconde information représentative de la qualité du canal de transmission est supérieure audit second seuil prédéterminé.

15. Procédé selon l'une quelconque des revendications 1 à 14, caractérisé en ce qu'une indication du passage du premier au second mode de transmission est transmise à travers un canal annexe réservé aux données de protocole.

16. Procédé selon l'une quelconque des revendications 1 à 15, caractérisé en ce qu'une indication du passage du second au premier mode de transmission est placée dans un desdits paquets disponibles.

## Patentansprüche

1. Verfahren zur Anpassung der Luftschnittstelle bei einer Funkkommunikationsanordnung zu mobilen Geräten des Typs, der zwischen wenigstens einem mobilen Gerät (14₁, 14₂) und wenigstens einer Basisstation (12₁, 12₅) Rahmen überträgt, die jeweils aus N Zeitintervallen bestehen, wobei in jedem Zeitintervall ein Datenpaket übertragen werden kann, wobei jedes Zeitintervall einer unterschiedlichen Kommunikation zwischen einem mobilen Gerät und einer Basisstation zugeordnet werden kann,
wobei die Anordnung einen ersten Übertragungsmodus vorsieht, bei welchem die zu übertragenden Daten (31) einer Kommunikation in von einer ersten Verschlüsselung (32) von Quellblöcken (33) stammenden ersten Blöcken organisiert sind, wobei jeder der ersten Blöcke eine Größe besitzt, die größer als der Inhalt von (P-1) Paket(en) (35) sind, wobei P eine gerade Zahl wenigstens gleich zwei ist, wobei die Daten desselben ersten Blocks in wenigstens P Pakete (35) verteilt werden,
dadurch gekennzeichnet, daß die Anordnung einen zweiten Übertragungsmodus, bei dem die zu übertragenden Daten (310) einer ersten Kommunikation in zweiten Blöcken organisiert sind, die jeweils eine Größe besitzen, die geringer oder gleich dem Inhalt von P/2 Paket(en) (37) ist, wobei die Daten desselben zweiten Blocks in höchstens P/2 Paket(e) verteilt werden, wobei wenigstens P/2 Paket(e) in bezug auf den ersten Übertragungsmodus verfügbar ist (sind), und einen automatischen Rückfragemechanismus für eine automatische erneute Übertragung vorsieht, der so eingesetzt wird, daß in den verfügbaren Paketen zweite Blöcke, die als schlecht empfangen erfaßt werden, erneut übertragen werden,
und daß für jede Kommunikation zwischen einem mobilen Gerät und einer Basisstation über einen Übertragungskanal eine Analyse (21; 62, 66) der Qualität des Übertragungskanals ausgeführt und einer der Übertragungsmodi in Abhängigkeit von der Analyse der Qualität des Übertragungskanals ausgewählt wird, wobei der zweite Übertragungsmodus ein Qualitätsniveau des Übertragungskanals erfordert, das höher als das ist, das vom ersten Übertragungsmodus gefordert wird.

2. Verfahren nach Anspruch 1, dadurch gekennzeichnet, daß die Funkkommunikationsanordnung vom Typ GSM (Groupe Spécial Mobile) ist,
und daß der zweite Übertragungsmodus vom Typ mit halber Datenrate ist, wobei ein zweiter Block (91₁ bis 91₃) eine Größe besitzt, die geringer oder gleich dem Inhalt eines Pakets ist, wobei jeder zweite Rahmen (92₁, 92₃, 92_{5,} 92₇, 92₉, 92₁₁) für eine gegebenen Kommunikation genutzt wird.

3. Verfahren nach Anspruch 2, dadurch gekennzeichnet, daß die Daten desselben ersten Blockes in wenigstens vier Pakete verteilt werden,
und daß die Daten desselben zweiten Blocks in dasselbe Paket verteilt werden.

4. Verfahren nach Anspruch 3, dadurch gekennzeichnet, daß der erste Übertragungsmodus zu der Gruppe gehört, die umfaßt:
- einen ersten Übertragungsmodus vom Typ mit voller Datenrate, bei welchem ein erster Block (71₁ bis 71₃) eine Größe sitzt, die im wesentlichen gleich dem Inhalt von vier Paketen ist, wobei die Daten desselben ersten Blocks im Verhältnis von etwa einem Achtel des ersten Blocks pro Paket in acht Pakete verteilt werden,
- einen ersten Übertragungsmodus vom Typ mit halber Datenrate, bei welchem ein erster Block (81₁ bis 81₃) eine Größe besitzt, die im wesentlichen gleich dem Inhalt von zwei Paketen ist, wobei die Daten desselben ersten Blocks im Verhältnis von ungefähr einem Viertel des ersten Blocks pro Paket in vier Pakete verteilt werden, wobei nur jeder zweite Rahmen (82₁, 82₃, 82₅, 82₇) für dieselbe Kommunikation genutzt wird.

5. Verfahren nach Anspruch 4, wobei der erste Übertragungsmodus vom Typ mit halber Datenrate ist,
wobei ein erstes Viertel eines gegebenen ersten Blocks (81₂) in einem Paket eines i-ten Rahmens (82₁) mit einem dritten Viertel eines vorhergehenden ersten Blocks (81₁) angeordnet ist,
ein zweites Viertel des gegebenen ersten Blocks in einem Paket eines (i+2)-ten Rahmens (82₃) mit einem vierten Viertel des vorhergehenden ersten Blocks angeordnet ist, ein drittes Viertel des gegebenen ersten Blocks in einem Paket eines (i+4)-ten Rahmens (82₅) mit einem ersten Viertel eines folgenden ersten Blocks (81₃) angeordnet ist,
ein viertes Viertel des gegebenen ersten Blocks in einem Paket eines (i+6)-ten Rahmens (82₇) mit einem zweiten Viertel des folgenden ersten Blocks angeordnet ist, dadurch gekennzeichnet, daß wenn der zweite Übertragungsmodus ausgewählt wird, der Übergang vom ersten zum zweiten Übertragungsmodus für jede Kommunikation darin besteht, als letztes gemäß dem ersten Übertragungsmodus übertragenes Paket ein Paket zu nehmen, in welchem ein viertes Viertel eines gegebenen ersten Blocks und ein zweites Viertel eines folgenden ersten Blocks angeordnet sind, wobei der folgende erste Block beim Empfang als nicht übertragen betrachtet wird, da ja die dritten und vierten Viertel des folgenden ersten Blocks nie übertragen werden,
und daß wenn der erste Übertragungsmodus ausgewählt wird, der Übergang vom zweiten zum ersten Übertragungsmodus für jede Kommunikation darin besteht, als erstes gemäß dem ersten Übertragungsmodus übertragenes Paket ein Paket zu nehmen, in welchem ein erstes Viertel eines gegebenen ersten Blocks angeordnet ist.

6. Verfahren nach Anspruch 4, wobei der erste Übertragungsmodus vom Typ mit halber Datenrate ist,
wobei ein erstes Viertel eines gegebenen ersten Blocks (81₂) in einem Paket eines i-ten Rahmens (82₁) mit einem dritten Viertel eines vorhergehenden ersten Blocks (81₁) angeordnet ist,
ein zweites Viertel des gegebenen ersten Blocks in einem Paket eines (i+2)-ten Rahmens (82₃) mit einem vierten Viertel des vorhergehenden ersten Blocks angeordnet ist, ein drittes Viertel des gegebenen ersten Blocks in einem Paket eines (i+4)-ten Rahmens (82₅) mit einem ersten Viertel eines folgenden ersten Blocks (81₃) angeordnet ist,
ein viertes Viertel des gegebenen ersten Blocks in einem Paket eines (i+6)-ten Rahmens (82₇) mit einem zweiten Viertel des folgenden ersten Blocks angeordnet ist, dadurch gekennzeichnet, daß wenn der zweite Übertragungsmodus ausgewählt wird, der Übergang vom ersten zum zweiten Übertragungsmodus für jede Kommunikation darin besteht:
- einen gegebenen zweiten Block zweizuteilen,
- in einem Paket, das dieser Kommunikation entspricht und das das vorletzte gemäß dem ersten Übertragungsmodus übertragene Paket ist, ein drittes Viertel eines gegebenen ersten Blocks und eine erste Hälfte des gegebenen zweiten Blocks anzuordnen,
- in einem Paket, das dieser Kommunikation entspricht und das das letzte gemäß dem ersten Übertragungsmodus übertragene Paket ist, ein viertes Viertel des gegebenen ersten Blocks und eine zweite Hälfte des gegebenen zweiten Blocks anzuordnen.

7. Verfahren nach Anspruch 6, dadurch gekennzeichnet, daß wenn der erste Übertragungsmodus ausgewählt wird, der Übergang vom zweiten zum ersten Übertragungsmodus für jede Kommunikation darin besteht:
- einen künstlichen ersten Block herzustellen,
- einen gegebenen zweiten Block zweizuteilen,
- in einem Paket, das dieser Kommunikation entspricht und das das vorletzte gemäß dem zweiten Übertragungsmodus übertragene Paket ist, eine erste Hälfte des gegebenen zweiten Blocks und ein erstes Viertel des künstlichen ersten Blocks anzuordnen,
- in einem Paket, das dieser Kommunikation entspricht und das das letzte gemäß dem zweiten Übertragungsmodus übertragene Paket ist, eine zweite Hälfte des gegebenen zweiten Blocks und ein zweites Viertel des gegebenen ersten Blocks anzuordnen,
- in einem Paket, das dieser Kommunikation entspricht und das das erste gemäß dem ersten Übertragungsmodus übertragene Paket ist, ein drittes Viertel des künstlichen ersten Blocks und ein erstes Viertel eines gegebenen ersten Blocks anzuordnen,
- in einem Paket, das dieser Kommunikation entspricht und das das zweite gemäß dem ersten Übertragungsmodus übertragene Paket ist, ein viertes Viertel des künstlichen ersten Blocks und ein zweites Viertel des gegebenen ersten Blocks anzuordnen.

8. Verfahren nach einem der Ansprüche 1 bis 7, dadurch gekennzeichnet, daß die zu übertragenden Daten Sprachdaten sind.

9. Verfahren nach Anspruch 8 und einem der Ansprüche 5 bis 7, wobei der Übergang vom ersten zum zweiten Übertragungsmodus eine zeitliche Verschiebung der Übertragung bewirkt, die eine schnellere Verarbeitung beim Empfang gestattet,
dadurch gekennzeichnet, daß beim Senden eine Analyse eines den Sprachdaten entsprechenden Sprachsignals ausgeführt wird,
und daß die zeitliche Verschiebung der Übertragung in Abhängigkeit von der Analyse des Sprachsignals in aufgeschobener Weise unterdrückt wird, indem versucht wird, auf dem beim Empfang wiederhergestellten Sprachsignal die Störungen aufgrund des Übergangs vom ersten zum zweiten Übertragungsmodus zu minimieren.

10. Verfahren nach Anspruch 9, dadurch gekennzeichnet, daß die Analyse eines Sprachsignals darin besteht, die Spektralkoeffizienten des Sprachsignals zu bestimmen.

11. Verfahren nach einem der Ansprüche 1 bis 10, dadurch gekennzeichnet, daß die zweiten Blöcke (36) von einer zweiten Verschlüsselung (39) der Quellblöcke (310) stammen.

12. Verfahren nach einem der Ansprüche 1 bis 11, dadurch gekennzeichnet, daß während des Betriebs (61) gemäß dem ersten Übertragungsmodus die Analyse (62) der Qualität des Übertragungskanals darin besteht, wenigstens eine erste Information zu ermitteln, die zu der Gruppe gehört, die umfaßt:
- die Anzahl von als schlecht empfangen erfaßten Paketen,
- eine Schätzung der Bitfehlerquote (BER),
- eine Schätzung der Impulsantwort des Übertragungskanals,
- eine Schätzung des Verhältnisses Signal zu Rauschen, und daß während eines Betriebs (65) gemäß dem zweiten Übertragungsmodus die Analyse (66) der Qualität des Übertragungskanals darin besteht, wenigstens eine zweite Information zu ermitteln, die zu der Gruppe gehört, die umfaßt:
- die Anzahl von erneut übertragenen Paketen,
- die Anzahl von erneut übertragenen Paketen, die als schlecht empfangen erfaßt werden,
- eine Schätzung der Bitfehlerquote (BER),
- eine Schätzung der Impulsantwort des Übertragungskanals,
- eine Schätzung des Verhältnisses Signal zu Rauschen.

13. Verfahren nach Anspruch 12, dadurch gekennzeichnet, daß während des Betriebs gemäß dem ersten (61) bzw. dem zweiten (65) Übertragungsmodus die Auswahl des zweiten bzw. ersten Übertragungsmodus einen Schritt des Vergleichs (63, 67) der die Qualität des Übertragungskanals darstellenden, ersten bzw. zweiten Information mit wenigstens einer vorbestimmten ersten bzw. zweiten Schwelle umfaßt.

14. Verfahren nach Anspruch 13, dadurch gekennzeichnet, daß während des Betriebs (61) gemäß dem ersten Übertragungsmodus zum zweiten Übertragungsmodus (65) übergegangen wird, wenn die die Qualität des Übertragungskanals darstellende erste Information geringer als die erste vorbestimmte Schwelle ist,
und daß während des Betriebs (65) gemäß dem zweiten Übertragungsmodus zum ersten Übertragungsmodus (61) übergegangen wird, wenn die die Qualität des Übertragungskanals darstellende zweite Information höher als die zweite vorbestimmte Schwelle ist.

15. Verfahren nach einem der Ansprüche 1 bis 14, dadurch gekennzeichnet, daß eine Angabe über den Übergang vom ersten zum zweiten Übertragungsmodus über einen für Protokolldaten reservierten Nebenkanal übertragen wird.

16. Verfahren nach einem der Ansprüche 1 bis 15, dadurch gekennzeichnet, daß eine Angabe über den Übergang vom zweiten zum ersten Übertragungsmodus in einem der verfügbaren Pakete angeordnet wird.

## Claims

1. Method of adapting the air interface, in a mobile radio system conveying, between at least one mobile station (14₁, 14₂) and at least one base station (12₁, 12₅) frames each made up of N time slots, a burst of data being transmitted in each time slot, each time slot being associated with a separate call between a mobile station and a base station,
said system providing a first mode of transmission in which the data (31) of a call to be transmitted is organised in first blocks obtained by first encoding (32) of source blocks (33), each of said first blocks having a size greater than the content of (P - 1) burst(s) (35) where P is an even number at least equal to 2, the data of the same first block being divided between at least P bursts (35),
characterised in that said system provides a second mode of transmission in which the data (310) of a call to be transmitted is organised in second blocks each having a size less than or equal to the content of P/2 burst(s) (37), the data of the same second block being divided between at most P/2 burst(s), at least P/2 burst(s) being available relative to said first mode of transmission, and an automatic retransmission request mechanism being implemented to retransmit in said available bursts second blocks detected to have been received incorrectly,
and in that, for each call between a mobile station and a base station via a transmission channel, the quality of said transmission channel is analysed (21; 62, 66) and one of said modes of transmission is selected (22; 64, 68) according to said analysis of the quality of the transmission channel, said second mode of transmission necessitating a level of quality of the transmission channel greater than that necessitated by said first mode of transmission.

2. Method according to claim 1 characterised in that said mobile radio system is of the GSM (Global System for Mobile communications) type,
and in that said second mode of transmission is of the half-rate type, the second block (91₁ through 91₃) having a size less than or equal to the content of a burst, only one frame in two (92₁, 92₃, 92₅, 92₇, 92₉, 92₁₁) being used for a given call.

3. Method according to claim 2 characterised in that the data of the same first block is distributed between at least four bursts,
and in that the data of the same second block is in the same burst.

4. Method according to claim 3 characterised in that said first mode of transmission is selected from:
- a full-rate type first mode of transmission in which a first block (71₁ through 71₃) has a size substantially equal to the content of four bursts, the data of the same first block being distributed between eight bursts, at the rate of approximately one eighth of said first block per burst;
- a half-rate type first mode of transmission in which a first block (81₁ through 81₃) has a size substantially equal to the content of two bursts, the data of the same first block being divided into four bursts, at the rate of approximately one quarter of said first block per burst, only one frame in two (82₁, 82₃, 82₅, 82₇) being used for the same call.

5. Method according to claim 4, said first mode of transmission being of the half-rate type,
a first quarter of a given first block (81₂) being placed in a burst of an ith frame (82₁) with a third quarter of a preceding first block (81₁),
a second quarter of said given first block being placed in a burst of an (i + 2)th frame (82₃) with a fourth quarter of said preceding first block,
a third quarter of said given first block being placed in a burst of an (i + 4)th frame (82₅) with a first quarter of a next first block (81₃),
a fourth quarter of said given first block being placed in a burst of an (i + 6)th frame (82₇) with a second quarter of said next first block,
characterised in that, when said second mode of transmission is selected, the change from said first mode of transmission to the second consists in, for each call, taking as the last burst transmitted in the first mode of transmission a burst in which are placed a fourth quarter of a given first block and a second quarter of the next first block, said next first block being considered by the receiver not to have been transmitted since the third and fourth quarters of said next first block are never transmitted,
and in that, when said first mode of transmission is selected, the change from said second mode of transmission to the first consists in, for each call, taking as the first burst transmitted in the first mode of transmission a burst in which is placed a first quarter of a given first block.

6. Method according to claim 4, said first mode of transmission being of the half-rate type,
a first quarter of a given first block (81₂) being placed in a burst of an ith frame (82₁) with a third quarter of a preceding first block (81₁),
a second quarter of said given first block being placed in a burst of an (i + 2)th frame (82₃) with a fourth quarter of said preceding first block,
a third quarter of said given first block being placed in a burst of an (i + 4)th frame (82₅) with a first quarter of a next first block (81₃),
a fourth quarter of said given first block being placed in a burst of an (i + 6)th frame (82₇) with a second quarter of said first next block,
characterised in that, when said second mode of transmission is selected, the change from said first mode of transmission to the second consists in, for each call:
- dividing a given second block in two;
- placing in a burst corresponding to this call and which is the penultimate burst transmitted in the first mode of transmission a third quarter of a given first block and a first half of said given second block;
- placing in a burst corresponding to this call and which is the last burst transmitted in the first mode of transmission a fourth quarter of said given first block and a second half of said given second block.

7. Method according to claim 6 characterised in that, when said first mode of transmission is selected, the change from said second mode of transmission to the first consists in, for each call:
- constructing an artificial first block;
- dividing a given second block in two;
- placing in a burst corresponding to this call and which is the penultimate burst transmitted in the second mode of transmission a first half of said given second block and a first quarter of said artificial first block;
- placing in a burst corresponding to this call and which is the last burst transmitted in the second mode of transmission a second half of said given second block and a second quarter of said given first block;
- placing in a burst corresponding to this call and which is the first burst transmitted in the first mode of transmission a third quarter of said artificial first block and a first quarter of a given first block;
- placing in a burst corresponding to this call and which is the second burst transmitted in the first mode of transmission a fourth quarter of said artificial first block and a second quarter of said given first block.

8. Method according to any one of claims 1 through 7 characterised in that said data to be transmitted is speech data.

9. Method according to claim 8 and any one of claims 5 through 7, the change from the first mode of transmission to the second inducing a transmission time shift enabling faster processing at the receiver,
characterised in that, at the transmitter, a speech signal corresponding to said speech data is analysed,
and in that said transmission time shift is eliminated in a deferred manner according to said analysis of the speech signal, with the aim of minimising disturbances of a speech signal reconstituted in the receiver due to said change from the first mode of transmission to the second.

10. Method according to claim 9 characterised in that said analysis of a speech signal consists in determining spectral coefficients of said speech signal.

11. Method according to any one of claims 1 through 10 characterised in that said second blocks (36) are obtained by a second encoding (39) of said source blocks (310).

12. Method according to any one of claims 1 through 11 characterised in that, during operation (61) in said first mode of transmission, the analysis (62) of the quality of the transmission channel consists in determining at least one first information selected from:
- the number of bursts detected to have been received incorrectly;
- an estimate of the bit error rate (BER);
- an estimate of the impulse response of the transmission channel;
- an estimate of the signal to noise ratio;
and in that, during operation (65) in said second mode of transmission, the analysis (66) of the quality of the transmission channel consists in determining at least one second information selected from:
- the number of bursts retransmitted;
- the number of bursts retransmitted detected to have been received incorrectly;
- an estimate of the bit error rate (BER);
- an estimate of the impulse response of the transmission channel;
- an estimate of the signal to noise ratio.

13. Method according to claim 12 characterised in that, during operation in said first mode of transmission (61) or respectively said second mode of transmission (65), the selection of the second or respectively the first mode of transmission comprises a step of comparing (63, 67) the first or respectively second information representative of the quality of the transmission channel with at least one first or respectively second predetermined threshold.

14. Method according to claim 13 characterised in that, during operation (61) in said first mode of transmission, the second mode of transmission (65) is selected if said first information representative of the quality of the transmission channel is below said predetermined first threshold,
and in that, during operation (65) in the second mode of transmission, the first mode of transmission (61) is selected if said second information representative of the quality of the transmission channel is above said predetermined second threshold.

15. Method according to any one of claims 1 through 14 characterised in that an indication of the change from the first mode of transmission to the second is transmitted over an auxiliary channel reserved for protocol data.

16. Method according to any one of claims 1 through 15 characterised in that an indication of the change from the second mode of transmission to the first is placed in one of said available bursts.
